# EUROPEAN PATENT APPLICATION

(11) **EP 0 569 215 A2**
(43) Date of publication of application: **10.11.1993**
(21) Application number: 93303456.3
(22) Date of filing: 04.05.1993
(51) Int. Cl.: G01N 35/02

(54) **Clinical chemistry analyser**

(30) Priority: 04.05.1992 FI 922004
(71) Applicant: WALLAC OY, SF-20101 Turku 10 (FI)
(72) Inventor: Ostrup, Jan, SF-20780 Kaarina (FI); Korpi, Jarmo, SF-21270 Nousiainen (FI)
(74) Representative: Gallafent, Richard John

(57) **Abstract**

A clinical chemistry analyses (10) comprises a sample dispensing unit (20) with sample vials (23), pipettes (17,21,41), washing unit (13) reagent cassette (24), shakes-incubator (30), bar code reades (40), and measuring unit (50). Under control of the computer (70), samples are transferred to the microtitration plate (11), reagents (19,45) are added and the plate (11) conveyed to the shaker/incubator (30) by means of the conveyor (12) and elevator (31). After incubation the sample plate (11) is then transferred to the measuring unit (50). Because the measuring unit (50) contains several measuring heads e.g. flaorimeter (52), photometer (53), luminometer (54), Beta (55) and Gamma (56) counters, several different types of assay can be performed such as fluoro-immuno and enzyme-immuno assays.

## Description

The invention relates to a measuring method and a measuring apparatus having a measuring unit with a light detector for measuring a sample.

When using known measuring apparatuses, which base on light measurement like liquid scintillation counters, each stage of sample dispensing must be performed manually. After the reagent has been added to the sample and the sample has been incubated, washed and a measuring liguid has been added thereto, the sample is placed in the measuring apparatus. All the described actions are necessary for a specific measuring apparatus only. If it is desired to use a different measuring method, another measuring apparatus is needed and sample handling must be performed in a different way as is necessary for that particular apparatus.

The drawbacks in the use of known measuring apparatuses are the complicated and laborious manual stages and the fact that changing of measuring method is problematic. The objective of this invention is to remove the above drawbacks. The measuring method according to the invention is characterized in that the measuring method of a sample is chosen from two or more different measuring methods which can be performed by the same measuring apparatus.

The measuring apparatus according to the invention is characterized in that the the measuring apparatus comprises one or more such measuring units that enable measurement of the sample with one or more different measuring methods. Therefore, any of the available measuring units permits selection of the measuring method without the need for changing parts in the measurement head. The measuring apparatus may contain, for example, the following measuring units: time delayed fluorometer, fluorometer, photometer, luminometer, beta counter, and gamma counter.

According to one advantageous embodiment, the measuring apparatus comprises a control unit and a conveyor for processing one or more samples at successive stages or simultaneously in one or more of the following sample handling devices of the measuring apparatus: sample plate identification device, sample dispenser, device for adding one or more reagents and/or diluter, shaker and/or incubator, washer, and the measuring solution dispenser.

According to another advantageous embodiment, the measuring apparatus comprises a reagent cassette having places for reagent bottles, dilution vials and both unused and used pipette tips.

In the following, the invention will be described in greater detail referring to the enclosed drawings in which
- figure 1: shows schematically a side view of the measuring apparatus of the invention,
- figure 2: shows part of the sample plate conveyor mechanism seen from above,
- figure 3: shows the mechanism of figure 2 seen from the side,
- figure 4: shows the sample plate identification device seen from the side,
- figure 5: shows the mechanism of figure 4 seen from above,
- figure 6: shows schematically the sample dispenser of the measuring apparatus of figure 1 seen from the side,
- figure 7: corresponds to figure 6 shows dispensing of samples on the sample plate,
- figure 8: shows the reagent cassette of the measuring apparatus of figure 1 seen from above, and
- figure 9: shows schematically the measurement head of the measuring apparatus of figure 1 seen from the side.

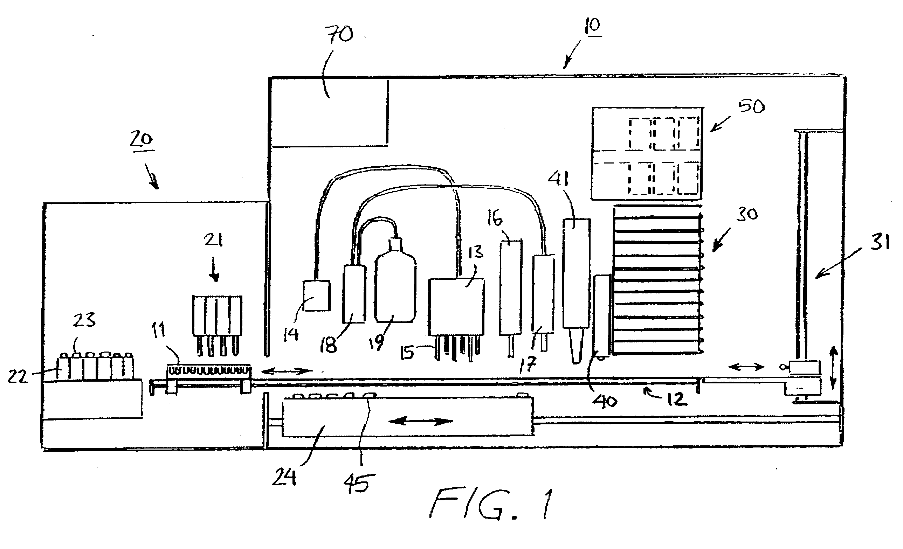

Figure 1 shows schematically a measuring apparatus 10 according to the invention and a sample dispenser 20 connected to it seen from the side. The main parts of the measuring apparatus 10 are a shaker/incubator 30 functioning as the store of sample plates, a reagent cassette 24 and a measurement head 50. Inside the measuring apparatus 10, there are also various sample handling devices 13-18, and a conveyor 12 and an elevator 31 for transferring a sample plate 11 like e.g. a micro titration plate.

An example of the operation of a measuring apparatus 10 according to the invention is presented in the following, the operations essentially corresponding to those used in the applicant's DELFIA-measuring method.

Before actuating the measuring apparatus 10, it is checked that there is a sufficient amount of measuring solution in the measuring solution bottle 19. The containers for washing fluid and rinsing fluid as well as the waste container, which are situated outside the measuring apparatus 10 and which are not shown in the drawings, are checked in a similar way.

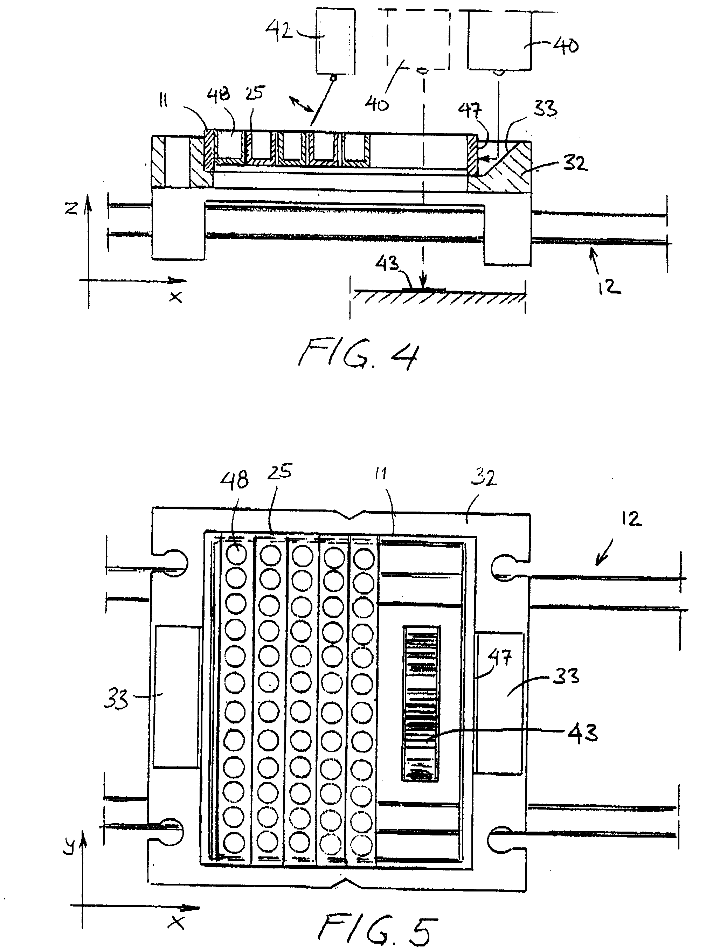

Next, empty sample plates 11 are loaded into the measuring apparatus 10. This is performed by removing a plastic foil from the sample plate 11 and feeding the plates one by one on the conveyor 12 at that end of the apparatus which is situated by the sample dispenser 20 on the left side of figure 1. The conveyor 12 transfers the sample plate 11, on the right side of the figure, on the elevator 31 which lifts the sample plate 11 into the shaker/incubator 30. When the sample plate 11 on the conveyor 12 passes the sample plate identification device, the bar code reader 40 reads the bar code 47 of the sample plate and stores it to the memory of the contol unit 70 of the measuring apparatus 10. The bar code reader 40 also observes the number of sample bars 25 on the sample plate 11. The identification procedure is shown in greater detail in figures 4 and 5.

In the above described way, 12 sample plates 11 at most are loaded into the shaker/incubator 30 which simultaneously functions as a store for sample plates 11. As the sample plates 11 have thus been fed into the shaker/incubator, identification information of each sample plate 11 have been simultaneously stored in the memory of the control unit 70 of the measuring apparatus 10. This is important because, during dispensing of samples to the sample plates 11 and the subsequent measurement, the control unit 70 must all the time be aware of what samples are on different sample plates 11. Before the actual operation of the measuring apparatus 10, the reagent boxes 26 needed in the measurement must be loaded in the reagent cassette 24 of the measuring apparatus 10.

When the measuring apparatus 10 is actuated, the bar code reader 40 goes and reads the bar codes 49 of the reagent boxes 26 in the reagent cassette 24. Then the elevator 31 and the conveyor 12 fetch the first sample plate 11 from the shaker/incubator 30, which functions as a store of sample plates, and convey it in front of the washer 13. The valve 14 of the washer 13 dispenses washing liquid from a container outside the measuring apparatus 10 to the sample plate 11 under the washer 13. The washer 13 has two kinds of nozzles 15, the first feeding washing liquid and the second simultaneously sucking it.

Washed sample plates 11 are transferred near the sample dispenser 20 where the samples are kept in sample vials 23 in sample vial cassettes 22. Samples to be measured are transferred to sample plate 11 by means of a pipetting apparatus 21 which draws samples from the sample vials 23 and dispenses them to the sample plate 11.

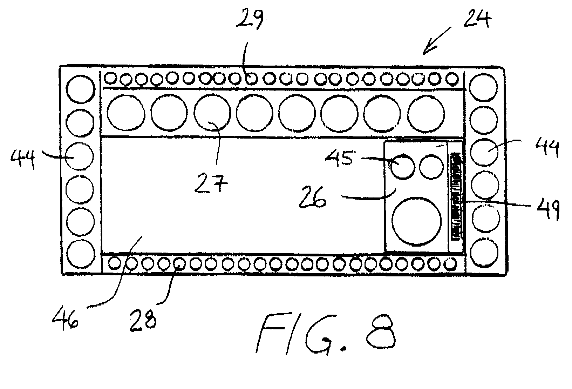

After the sample dispenser 20, the conveyor 12 carries the sample plate 11 again to the measuring apparatus 10, under the pipetting apparatus 41. The pipetting apparatus 41 fetches an unused pipette tip 28 and dispenses the reagent material from a reagent bottle 45 in the reagent cassette 24 on the sample plate 11. Figure 8 shows a more detailed view of the reagent cassette 24 with pipette tips 28 and reagent bottles 41.

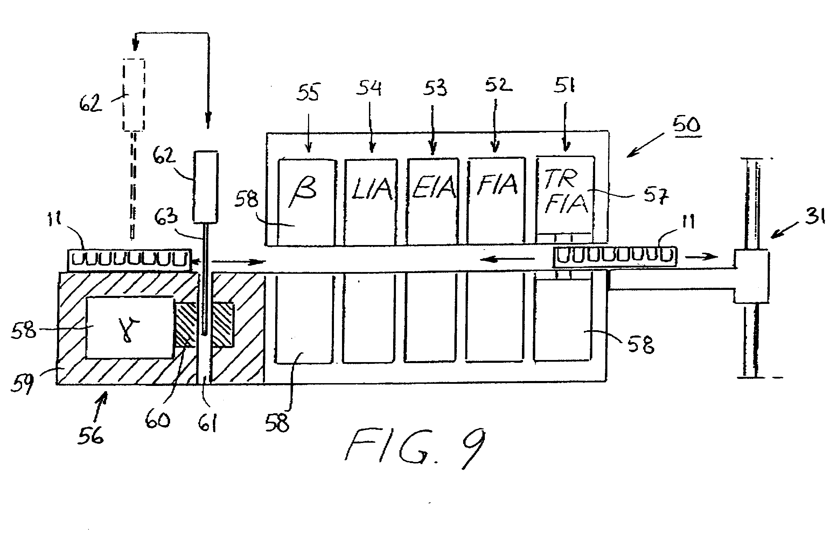

The sample plate 11 with the reagent material is then transferred to the shaker/incubator 30 which performs shaking and simultaneous incubation. Then the elevator 31 transfers the sample plate 11 back on to the conveyor 12 whereby the sample plate 11 is again transferred under the washer 13. After washing, the sample plate 11 is carried under a measuring liquid dispenser 17 where a pump 18 of the measuring liquid dispenser 17 dispenses measuring liquid into the wells of the sample plate 11 from the bottle 19. The sample plate 11 is then again conveyed to the shaker/incubator 30 where a short shaking is performed after which the sample plate is transferred to the measurement head 50 for measurement. The measurement head 50 is a multi-function measurement head having several measuring units 51-56 for different measuring methods. The measurement head 50 is shown in greater detail in figure 9. After measurement, the sample plate 11 is transferred back to the shaker/incubator 30 which functions as the store of the sample plates 11.

In case the sample has been impregnated in a filter paper, it is dispensed to the well 48 of the sample plate 11 as a piece of filter paper. For piercing this piece, the measuring apparatus 10 may be provided with a separate device which is not shown in the drawings. The measuring apparatus 10 must then also have a disk remover which removes the piece of filter paper impregnated with sample from a well of the sample plate 11 after incubation.

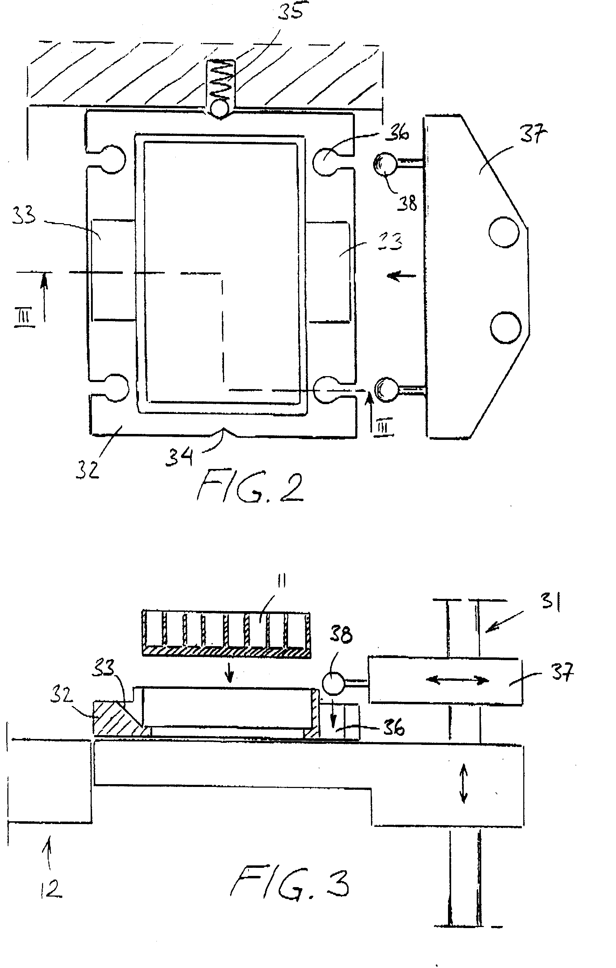

Figure 2 shows a part of the sample plate transfer mechanism seen from above. The sample plate 11 is placed in a frame 32 having mirrors 33 on both edges for reading the bar code. The frame 32 has notches 34 on the sides to which a springed locking device 35 in the transfer carriage or in the shaker/incubator 30 locks.

For moving the frame 32 of the sample plate, the frame is provided with vertical recesses 36 which the projections 38 of the transfer device 37 of the elevator grip. As shown in figure 2, the ends of the projections 38 are shaped spherical.

The cross-sectional view of figure 3 shows the frame 32 on the transfer device of the elevator 31 and, above it, the sample plate 11 fitting thereon. The bar code of the sample plate can be identified by means of the mirror 33 of the frame 32 as is shown in greater detail in figure 4. The projections 38 of the transfer device of the elevator 31 move into the recess 36 of the frame 32 from above.

Figure 4 shows the identification device of the sample plate 11 seen from the side. The bar code reader 40 reads the identification bar code 47 of the sample plate 11 by means of the mirror of the frame 32. The bar code reader 40 also observes if all sample bars 25 in the sample plate 11 are not in place. Then the bar code reader 40 sees the bar code 43 on the bottom of the apparatus through the sample plate 11 and the control unit 70 stores into memory the type of the sample plate 11.

The identification device of the sample plate 11 also comprises a detector 42 which is placed above the sample plate 11 and which tells if the sample plate or any of its sample bars 25 is raised and not properly in place. Since any projecting part may cause problems during motion of the sample plate 11 forwards on the apparatus, the control unit 70 of the apparatus is programmed to give an alarm in this kind of situation.

Figure 5 shows the sample plate 11 of figure 4 and its identification device seen from above. The sample plate 11 placed in the frame 32 on the conveyor 12 has five sample bars 25 in place. A commonly used sample plate can take eight sample bars 25 and each sample bar has 12 sample wells.

When a sample plate 11 is loaded inside the measuring apparatus of the invention, the conveyor 12 carries the sample plate 11 past the bar code reader 40. The bar code reader 40 reads the bar code 47 of the sample plate 11 by means of a mirror 33 on the frame 32 and stores the information in the control unit 70 of the apparatus. Because three sample bars 25 of the sample plate 11 of figure 5 are missing, the bar code reader 40 reads at places of the missing sample bars the bar code 43 at the bottom of the apparatus and stores also this piece of information in the memory of the control unit 70. At a later stage, when said sample plate 11 is in the measuring apparatus of the invention and is being measured in the measurement head 50, the apparatus can take into account the missing sample bars 25. In this way the pipetting apparatus gets information about those sample wells 48 of the sample bars 25 which are available.

The bar code reader 40 is also able to move sideways so that it can Identify the reagent packages 26 in the reagent cassette 24, presented in greater detail also in figure 8, from the bar codes 49 placed thereon.

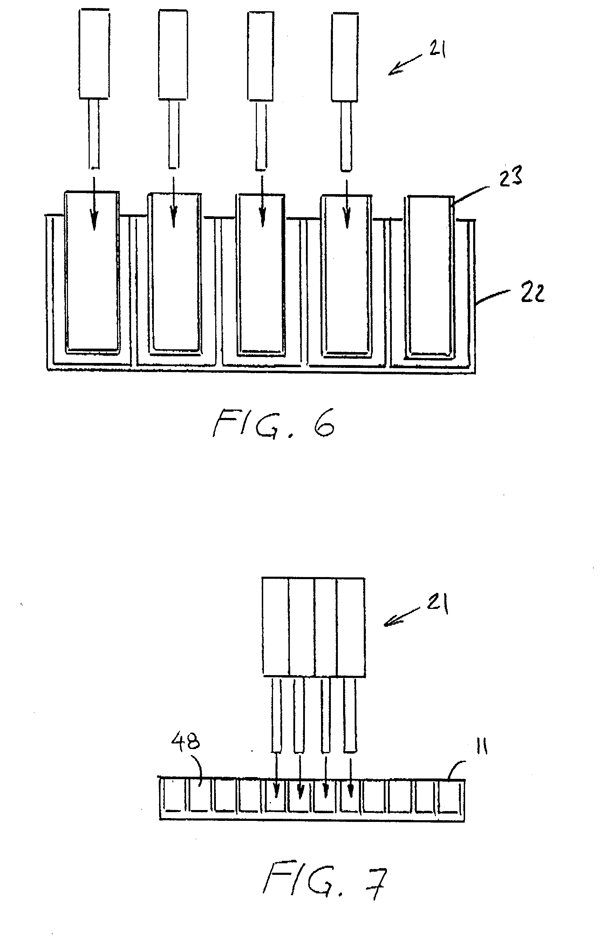

Figure 6 shows schematically a side view of a sample dispenser 20, which is connected to the measuring apparatus 10 and is situated on the left side of figure 1. This equipment is known from prior art but it is presented in this connection to clarify the operation of the measuring apparatus of the invention as a whole. The pipetting apparatus 21 of the sample dispenser 20 draws samples from sample vials 23 placed in the sample vial cassette 23 and transfers the samples onto the sample plate 11 as shown in figure 7.

Figure 8 shows a top view of the reagent cassette 24 of the measuring apparatus 10 of figure 1, the reagent cassette having, in this exemplary case, only one reagent package 26 in a space 4 in its middle part. The reagent package 26 is provided with a bar code 49 for identification and the package contains several reagent bottles 45. In addition, there are several dilution containers 27 placed in the reagent cassette 24 and places for pipette tips. Unused pipette tips 28 are placed on one side of the reagent cassette 24 and used pipette tips 29 on the opposite side. Furthermore, there are places for the caps 44 of the reagent bottles 45 at the ends of the reagent cassette 24.

Figure 9 shows schematically the measurement head 50 of the measuring apparatus of figure 1 seen from the side. The sample plate 11 is brought to the measurement head 50 by the elevator 31. Then the sample plate 11 is carried to one of the measuring units so that each sample well comes in turn to a right position for measurement.
The measurement head of figure 9 is a multi-function measurement head having several measurement heads. Therefore the apparatus enables one to perform several different measurements without the need for changing any parts. The measuring units are labelled with reference numbers 51-56 and the measuring units are labelled with letters indicating the measuring method which is used in the measuring unit. The measuring units in figure 9 are from right to left in the following order:
51 Time Resolved Fluorometer or TR Fluorometer
   Measuring method:
   Time Resolved Fluoro Immuno Assay or TR FIA
52 Fluorometer
   Measuring method: Fluoro Immuno Assay or FIA
53 Photometer
   Measuring method: Entsyme Immuno Assay or EIA
54 Luminometer
   Measuring method: Lumini Immuno Assay or LIA
55 Beta Counter
   Measuring method: Beta measurement or β-measurement
56 Gamma Counter
   Measuring method: Gamma measurement

The right-hand measuring unit 51 TR FIA of the measurement head 50 in figure 9 is a time resolved fluorometer or a TR fluorometer having a light source 57 above the sample plate 11 and a light detector 58 below the sample plate 11. During a measurement the sample plate 11 moves so that each sample well to be measured in the sample plate is moved in succession to the measuring position of the measuring unit.

In case of a FIA measurement, each sample well of the sample plate 11 is moved in turn to the measuring position of the fluorometer 52. Correqpondinfly, in an ETA measurement the samples are moved in front of the photometer 53 and in a LIA measurement the samples are moved in front of the luminometer 54. The measuring units 51-53 have a light source 57 above the sample plate 11 and a light detector 58 below the sample plate 11. However, measuring characteristics and structure of these measuring units may vary considerably. The measuring unit 55 is a beta counter having light detectors 58 above and below the sample plate 11.

The left-hand measuring unit 56 of the measurement head 50 standing apart from the others in figure 9 is a gamma counter. Since gamma samples are radioactive, the light detector 58 is disposed inside a lead shield 59. Samples are dispensed from the sample plate 11 by a separate pipette 62 so that the sample is drawn into the tip 63. For the measurement, the tip 63 is lowered into a well 61 with open top and bottom inside a crystal 60 which transforms radiation into light.

In the measurement head 50 of figure 9, the measuring units 51-55 are disposed so closely that there is no room in the measurement head to measure several sample plates 11 simultaneously. Only the gamma counter 56 and its pipette 62 are far enough from the other measuring units 51-55 so that, for example, the TR fluorometer 51 and the gamma counter 56 could operate simultaneously. However, it is possible to arrange the measuring units 51-55 far enough from each other so that even all of them could operate independently from each other. In this case, the measurement head 50 is provided with equipment which can simultaneously move several sample plates 11.

Such embodiments of the measurement head 50 are also possible wherein some units e.g. the TR fluorometer 51 and the fluorometer 52 are united. Then the same measuring unit could perform both measurements. This united measuring unit could possibly perform other additional measurements like a photometric measurement, for example. Thus all possible combinations of the measuring units 51-56 are possible.

Furthermore, the measuring apparatus 10 of figure can be designed so that the conveyor 12 and the elevator 31 can simultaneously move several sample plates 11 independently of each other. This allows a simultaneous and independent performance of the above described operations on different sample plates like sample dispensing, addition of one or more reagents or dilution, shaking and/or incubation, washing, addition of measuring liquid and/or dilution and executing the measurement. Thus several operations that require less time can be done quickly in succession so that the whole apparatus need not to wait the execution of some other operations which require a longer time. Naturally, the control unit 70 of the measuring apparatus 10 is also such that it can perform all simultaneous operations accurately and reliably.

The measuring apparatus 10 can be a mere measuring instrument like a fluorometer or liquid scintillation counter but the control unit 70 connected to the measuring instrument can also be so designed that it is capable of simultaneously assaying the measured sample 11. Furthermore, the control unit 70 can also be of such a kind that it is capable of assaying and also diagnosing a blood sample, for example. The same measuring instrument thus assays the person's blood sample and diagnoses the person's possible disease.

It is obvious to a specialist in the field that different embodiments of the invention can vary within the limits of the enclosed claims.

## Claims

1. Measuring method **characterized** in that the measuring method of a sample (11) is chosen from two or more different measuring methods which can be performed by the same measuring apparatus (10).

2. Measuring method according to claim 1 **characterized** in that the measuring method of the sample (11) is chosen from the following measuring methods:
- Time Resolved Fluoro Immuno Assay or TR FIA,
- Fluoro Immuno Assay or FIA,
- Entsyme Immuno Assay or EIA,
- Lumino Immuno Assay or LIA,
- Beta measurement,
- Gamma measurement,
and that the measurement can be performed by the same measuring apparatus (10).

3. Measuring method according to claim 1 or 2 **characterized** in that the same measuring apparatus (10) is used for both measuring the sample (11) and performing one or more of the following sample handling operations prior to measurement:
- identification of a sample plate (11) like a micro titration plate for example,
- dispensing of samples,
- addition of one or more reagents or dilution,
- shaking and/or incubation,
- washing,
- dispensing of the measuring liquid.

4. Measuring apparatus (10) having a measuring unit (51-56) with a light detector (58) for measuring a sample (11) **characterized** in that the measuring apparatus (10) comprises one or more different measuring units (51-56) by which measuring of the sample (11) can be performed with one or more measuring methods.

5. Measuring apparatus (10) according to claim 4 **characterized** in that the measuring apparatus (10) comprises a multi-function measurement head (50) having one or more different measuring units (51-56) by which measuring of the sample (11) can be performed with one or more different measuring methods without the need for changing parts of the measurement head.

6. Measuring apparatus (10) according to claim 4 or 5 **characterized** in that the measurement head (50) of the measuring apparatus (10) comprises at least one of the following measuring units (51-56):
- Time Resolved Fluorometer (51),
- Fluorometer (52),
- Photometer (53),
- Luminometer (54),
- Beta counter (55),
- Gamma counter (56).

7. Measuring apparatus (10) according to claim 4, 5 or 6 **characterized** in that the measuring apparatus (10) comprises conveyors (12, 31) for transferring the sample (11) to a preselected measuring unit (51-56) of the measurement head (50) so that sample measurement can be chosen to be performed by any measuring unit of the measuring apparatus and with any measuring method.

8. Measuring apparatus (10) according to any of the claims 4-7 **characterized** in that the measuring apparatus (10) comprises a control unit (70) and conveyors (12, 31) for processing one or more samples (11) at successive stages or simultaneously.

9. Measuring apparatus (10) according to any of the claims 4-8 **characterized** in that the measuring apparatus (10) comprises a control unit (70) and conveyors (12, 31) for processing one or more samples (11) at successive stages or simultaneously in one or more of the following sample handling devices of the measuring apparatus:
- sample plate (11) identification device (40),
- sample dispenser (20, 21)
- device for adding one or more reagents and/or diluter (41, 45),
- shaker and/or incubator (30),
- washer (13, 14, 15),
- measuring solution dispenser (17, 18, 19).

10. Measuring apparatus (10) according to any of the claims 4-9 **characterized** in that the measuring apparatus (10) comprises a control unit (70) and conveyors (12, 31) for measuring one or more samples (11) simultaneously in the measuring units (51-56) of the measuring apparatus.

11. Measuring apparatus (10) according to any of the claims 4-10 **characterized** in that the measuring apparatus (10) comprises a reagent cassette (24) having places for reagent bottles (45) and dilution vials (27) and both unused tips (28) and used pipette tips (29).

12. Measuring apparatus (10) according to any of the claims 4-11 **characterized** in that the sample to be measured has been placed on a sample plate (11) like for example a micro titration plate and that conveyors (12, 31) of the measuring apparatus (10) and the measuring units (51-56) of the measuring head (50) are designed for handling this kind of sample plate.
